Europäisches Patentamt

European Patent Office

Office européen des brevets

(19)

(11) **EP 0 631 102 B1**

(12) **EUROPEAN PATENT SPECIFICATION**

(45) Date of publication and mention
of the grant of the patent:
**17.02.1999 Bulletin 1999/07**

(51) Int Cl.⁶: **F28F 25/08**

(21) Application number: **94303970.1**

(22) Date of filing: **02.06.1994**

(54) **Pack and a method of constructing a pack**

Packung und Verfahren zur Fertigung einer Packung

Paquet et méthode pour construire un paquet

(84) Designated Contracting States:
**AT BE CH DE DK ES FR GB GR IE IT LI LU MC NL
PT SE**

(30) Priority: **23.06.1993 ZA 934518
09.07.1993 ZA 934967**

(43) Date of publication of application:
**28.12.1994 Bulletin 1994/52**

(73) Proprietor: **T. C. WATERMEYER GROUP, Inc.
Sandton, Transvaal Province (ZA)**

(72) Inventor: **Bosman, Peter Barry
Sandton, Transvaal Province (ZA)**

(74) Representative: **Jenkins, Peter David et al
PAGE WHITE & FARRER
54 Doughty Street
London WC1N 2LS (GB)**

(56) References cited:
**EP-A- 0 005 535          EP-A- 0 058 797
EP-A- 0 250 061          GB-A- 2 046 623
US-A- 3 010 706          US-A- 4 915 877**

## Description

This invention relates to a pack and a method for constructing a pack. Evaporative coolers may be used for cooling a gas such as air using a liquid such as water as a coolant, or for cooling a liquid using gas as a coolant, and/or for humidifying the gas.

Induced and natural draft wet cooling towers, in both cross and counter-flow configurations, are examples of an evaporative cooler to which this invention relates, for cooling water using air as the coolant. The present invention relates particularly to packings therefor. However, it should be understood that whenever the invention is described with respect to cooling towers only, it is not the Applicant's intention that the invention, insofar as it relates to evaporative coolers per se or to packs or packings therefor, be limited to cooling towers.

The Applicant is aware of different types of packings for wet cooling towers, and for evaporative coolers which work on the same principles as cooling towers. These include packings comprising packs which are known to the Applicant as "film packs", "trickle packs" and "splash packs" respectively. In wet cooling towers, the film packs and trickle packs provide an increased surface area over which the water can flow, thereby increasing the exposed surface area of the water to promote its cooling, whereas the splash packs provide impact surfaces for the water which, on impact with these surfaces breaks into relatively small droplets, thereby increasing the exposed surface area of the water to promote its cooling.

In pure splash pack configurations, horizontal splash surfaces are provided. Splash packs require a much larger volume to achieve the same cooling as a film pack. Film packs comprise a large number of thin plates which can be corrugated in various configurations to increase their surface area to provide as great a surface area as possible for a given unit volume. The water to be cooled spreads across the surface of the plates in the form of a thin film, to create a maximum air water contact area, per unit volume.

Trickle packs are similar to film packs but instead of providing an uninterrupted surface area across which the water can spread, essentially vertical apertured sheets or grids in close proximity to each other, are provided. Water drops trickle down the inter-aperture strips which are configured so as to extend the distance that the droplets travel. The grids in a trickle pack can be corrugated in a similar fashion to the plates in a film pack.

EP-A-0250061, which is the closest prior art document, discloses packing elements for use in one of either a trickle pack or a splash pack. In use, the trickle pack elements occupy horizontally spaced, vertical planes within a cooling tower and the splash pack elements occupy vertically spaced, horizontal planes within a cooling tower.

GB-A-2046623 discloses a perforated support plate for supporting and injecting fluids into a bed of packing elements in treatment towers or vessels.

EP-A-0005535 discloses an apparatus for effecting direct mass or heat exchange between two streams of material by bringing them into contact. The apparatus comprises a column having mixing chambers defined by prismatic hollow bodies having central constrictions.

According to the invention there is provided a pack for an evaporative cooler according to claim 1.

It will be appreciated that the length of the pack is its height dimension in use.

The inclined surface of a first of the plurality of packing elements may be a curved surface which curves in one direction and the inclined surface of a second of the plurality of packing elements may be a curved surface which curves in another direction, and the first and second packing elements may be arranged in a manner to encourage continual dispersion and discourage focusing of liquid as it passes through the pack in use.

By "focusing" is meant the convergence of the liquid to one or more particular regions of the pack from whence re-dispersion of the liquid over the surfaces of lower packing elements in the pack, cannot readily occur.

The packing elements may be aligned or staggered in the direction of the length of the pack or packing.

The packing elements may be substantially square, and may be arranged in the pack such that at least one of the packing elements is oriented at about 90° to the others, i.e. with its inclined surface having an angle of inclination varying in a direction corresponding to its width, while the inclined surface of other packing elements in the pack have their respective angles of inclination varying in a direction corresponding to the lengths of the elements.

The packing may comprise a plurality of packs as abovedescribed, with at least one of the packs oriented at about 90° to the others, i.e. with the inclined surfaces of the packing elements in at least one of the packs having an angle of inclination which varies in a first direction corresponding to the respective widths or lengths of the elements, and the inclined surfaces of the elements in another of the packs varying in a second direction which is substantially at 90° to the first direction.

The plurality of packing elements may comprise bent sheets of an apertured material which are connected to one another or to other sheets in the pack so as to retain the plurality of sheets in their bent configuration.

The second packing element may comprise an inverted first packing element.

The first packing element and the second packing element may each comprise a sheet of an apertured material having an angular bend and having an arcuate bend which defines the curved surface, and the angular bends of the first and second packing elements may be staggered.

The pack of the present invention combines features characteristic of both trickle and splash packs. Thus, the packing elements have aperture dimensions sufficiently great to inhibit filming of the liquid over the apertures in use. Further, the void ratio and size of the apertures are dependent upon whether the pack is intended for use in a cross-flow environment or for use in a counter-flow environment. In a cross-flow environment the size of the apertures needs to be sufficient to permit the liquid to pass through them. In a counter-flow environment, the size of the apertures needs to be sufficient to permit the passage therethrough of the liquid against the pressure of gas simultaneously being drawn upwardly through the apertures. For similar reasons, the void ratio of packing elements in a pack according to the invention intended for use in cross-flow conditions is generally lower than that of packing elements intended for use under counter-flow conditions. The dimensions of the apertures will also be dependent upon the nature of the particular liquid and the state of the liquid (e.g. its degree of cleanness). Whereas relatively small apertures will be suitable for relatively clean water, relatively large apertures and relatively wide inter-aperture strips will better suit relatively dirty water with a high proportion of impurities.

Furthermore, the width dimensions of inter-aperture strips of the packing elements are sufficiently great to provide effective impact or splash surfaces in the splash regions thereof and to effectively increase the exposed surface area of the liquid travelling over the surfaces in the trickle-pack regions of the packing elements. However, the top surface area of each of the packing elements (which is dependent upon the void ratio and width of the inter-aperture strips) is limited to an extent as will inhibit the formation of a liquid film (which is desired in film pack applications), and will promote flow or trickling of the liquid over the surface in the trickle regions of the packing elements.

Accordingly there are optimum values for dimensions of apertures, inter-aperture strips and void ratios, for combination splash/trickle pack packing elements.

The combination splash/trickle pack according to the invention comprises, as mentioned above, packing elements with inclined surfaces having varying angles of inclination. Thus the distance between adjacent (i.e. one above the other) packing elements in the pack varies. Respective regions of adjacent packing elements can touch each other or can be relatively close together, and other regions thereof are vertically spaced apart a distance which is great enough to cause the liquid coolant falling between the elements, to splash on impact with adjacent or more remote packing elements, such that sufficiently small droplets are formed. Thus the greatest distance between immediately adjacent packing elements can be less than what is required for falling liquid to accumulate sufficient energy to splash on impact, since the dimensions of the apertures and the void ratio of the packing elements are such that falling liquid not infrequently misses the adjacent packing element and impacts upon a lower packing element instead.

In a preferred splash/trickle pack according to the invention, the packing elements have a void ratio in the range of from about 0.6 to about 0.95; apertures which are substantially uniform in size with width and length dimensions of approximately 10mm and 30mm respectively to approximately 60mm and 120mm respectively; and inter-aperture strips with a width dimension of approximately 2mm to 10mm; and adjacent first and second packing element are spaced apart at their furthest points from each other, a distance of approximately 75mm to 600mm, more preferably in the region of 100 to 400mm, even more preferably in the region of 200 to 300mm.

According to the invention there is provided a method of constructing a pack according to claim 12.

The first packing element may have two angular bends and an arcuate bend, the angular bends being separated from each other by the arcuate bend, and the second packing element may have two arcuate bends and an angular bend, the arcuate bends being separated from each other by the angular bend.

The packing elements may be connected together by attaching the first packing element to the angular bend of the second packing element. Preferably, the arcuate bend of the first packing element is attached to the angular bend of the second packing element. Instead, or in addition, the packing elements may be connected together by attaching one of the packing elements, along a periphery thereof, to the other packing elements.

The bends in the sheets constituting the first and second packing elements may be formed (e.g. as regards their relative configuration and positions) such that when the packing elements are placed with their respective bends staggered, at least a major portion of the periphery of the first packing element touches or is adjacent the second packing element. Preferably the distance between opposed peripheries of the first packing element in a direction across the bend(s), is substantially the same as the distance between the corresponding opposed peripheries of the second packing element and, furthermore, the bends in the packing elements are formed such that when the packing elements are placed with their respective bends staggered, said peripheries of the first packing element touch or are adjacent said peripheries of the second packing element.

The bends preferably are formed along the sheets of flexible, apertured material, but may be formed across the sheets if so desired.

It will be appreciated that the density of the pack can be varied by varying the angles of curvature of the bends in the sheets, thereby to vary the distance between adjacent packing elements.

A pack constructed according to the method of the invention is a combination trickle/splash pack. Each of the packing elements is undulating so that drops of liquid tend to flow (i.e. "trickle") along the inclined portions of the surfaces of the packing elements, increasing in size until they fall under gravity through the apertures to another packing element below. On impact (i.e. upon "splashing" on the surface of the packing element below) these larger drops break into relatively small droplets and the abovementioned trickle and splash processes are repeated. Meanwhile, those drops of liquid which strike a substantially horizontal portion of a packing element accumulate there until they can no longer be accommodated and fall under gravity to a packing element below where the trickle and splash processes are repeated.

Because of the gradual slope of the trickle surface regions of the packing elements according to the invention, droplets trickling down the pack have a longer distance to travel to achieve the same vertical displacement than in a conventional trickle pack in which the packing elements are generally vertically oriented. The pack of the invention thus provides a longer air contact time for the trickling liquid and thereby enhances the heat transfer capability of the pack.

The present invention is an improvement over both splash and trickle packs. In splash pack systems, it is necessary for the splash elements to be horizontal or as near horizontal as possible to avoid focusing. In trickle pack configurations, it is necessary for the pack elements to be as near vertical as possible to ensure that the liquid remains in close contact with the pack elements. The present invention is for a combination splash/trickle pack in which not only are the two types of packing configurations combined, but the combination results in an improvement in heat transfer efficiency over both the pure splash pack configuration and the pure trickle pack configuration, when that efficiency is related to the amount of material comprising the packing system.

Packing heat transfer characteristics are commonly defined by the term

$$Ka\,{}^V\!/_L = \lambda \left({}^L\!/_G\right)^{-n}$$

where

K   is the coefficient of mass transfer defined in terms of difference in absolute humidity
a   is the area of effective transfer surface per unit packing volume
V   is the effective packed volume per unit plan area
L   is the mass of liquid flow per unit plan area
G   is the mass of gas flow per unit plan area
λ   and n are constants dependent on the type of packing

A   is the actual transfer surface area of packing material per unit volume.

If V is assumed equal to unity then Ka/L per unit depth of pack can be defined for any packing system, and a comparison of Ka/L/A per unit area of pack material can be used to define the efficiency of the pack system. On this basis one finds that splash systems are in fact very efficient in terms of material used, where as trickle pack systems are in fact less efficient, if the same type of material is used for both systems.

This can easily be explained by the fact that a splash pack utilises the energy of the falling liquid to break up the liquid into small droplets thereby providing the extended surface area required for heat transfer whereas a trickle pack has to rely entirely on the surface area provided by the packing material.

However, despite this seeming inefficiency of trickle packs in relation to splash packs, trickle packs have a major advantage over splash packs, as for the same unit volume, they achieve a much higher heat transfer rate, i.e. for the same cooling performance trickle packs are far more compact and where space is a premium, they would normally have a decided advantage over splash packing systems.

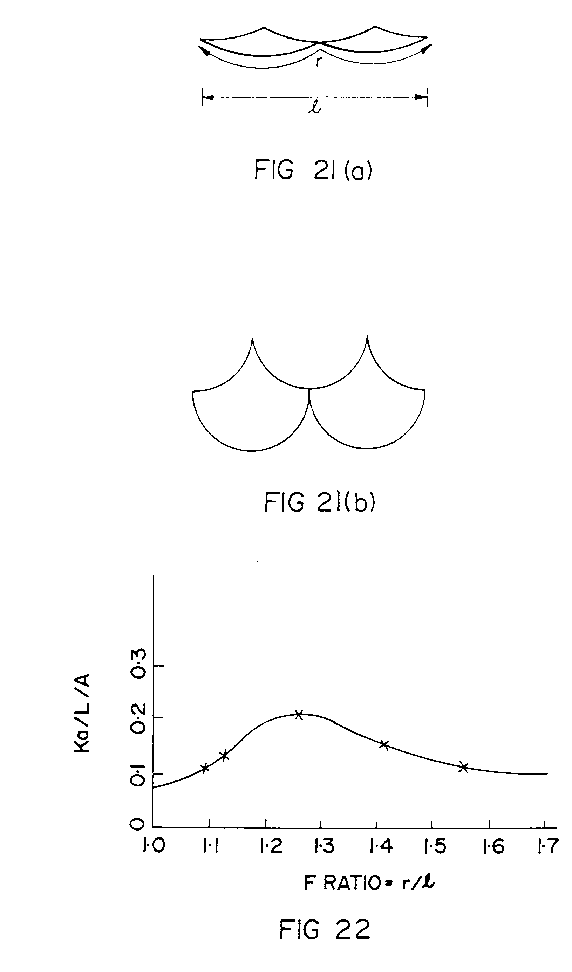

The purpose of the present invention utilises the advantages of both packing systems by combining the splash and trickle features of both systems. This results in a unique packing system which has the advantage of the compactness of a trickle pack system and the material efficiency of a splash system. Furthermore the combination of the two systems results in a packing system which has a higher heat transfer material efficiency than both the original systems. Figures 21(a) and 21(b) illustrate two different configurations of the invention in its preferred form.

Figure 21(a) illustrates a very flat configuration which can be characterised by the ratio F, being profile length / actual length, r / ℓ which in this case could be say 1.1, whereas Figure 21(b) illustrates a deep configuration which if the curved element were semi-circle, the ratio F would be 1.57.

In practice, the flatter the configuration, as illustrated in Figure 21(a), resulting in the packing elements being almost horizontal, the closer the performance of the arrangement approaches that of a pure splash pack system. By contrast, the deeper the configuration i.e. with the elements being more vertically disposed as depicted by Figure 21(b), the closer the performance approaches that of a trickle pack system.

For a given value of L, and with G being equal to L, values of Ka/L can be obtained, for a variety of the preferred packing configurations in which the shape is varied from that illustrated in Figure 21(a) to Figure 21(b), i.e. in which the ratio F is varied from 1.1 to 1.57. For each value of F, a specific value of Ka/L and A can be derived. Values of Ka/L/A representing packing transfer characteristics per unit of packing material transfer surface area have been derived from a cooling tower test facility.

The graph of Ka/L/A against F illustrated in Figure 22 clearly shows that as F increases from a low value of say 1.1, Ka/L/A also increases to an optimum value and then decreases again to low value at F = 1.57. This clearly indicates that an optimum value of F lies in the range 1.2 to 1.35 and that within this range optimum heat transfer efficiency in relation to material used, is obtained. Furthermore, as this efficiency is greater than either extreme, i.e. the pure splash configuration where F = 1 or the pure trickle where F exceeds 1.57, it is clear that the invention represents a significant improvement over both the pure splash pack and pure trickle pack systems.

Thus according to the invention the ratio F is preferably in the range of about 1.1 to about 1.57, more preferably 1.14 to about 1.42 even more preferably 1.18 to about 1.36, and most preferably 1.2 to about 1.35.

The sheets from which the packing elements are prepared may be of an expanded metal which is corrosion resistant, or of plastics material. The inter-aperture strips of metal or plastic forming the major surfaces of the sheets, provide trickle or splash surfaces as the case may be. The expanded metal or plastics sheets may be raised or flattened. Preferably the sheets have flat major surfaces to maximise the splash resulting from impact of a droplet upon it.

Whenever the terms "expanded metal" and "expanded plastics" are used herein, they should be understood to mean a metal or plastics network formed by suitable stamping or cutting sheet metal or plastic and stretching it to form an open mesh.

The method according to the invention may include constructing the pack on a substantially horizontal support surface, by orienting the packing elements so as to place their major surfaces in vertical planes and with each of the packing elements being self-supportable on a periphery thereof from which the bends extend in a substantially vertical direction. Thus, the pack can be constructed at ground level.

The packing elements may be connected to each other by tying them together, for example at intervals with wire ties. Instead, or in addition, the packing elements may be connected together by means of a rigid connecting element threaded through apertures of both packing elements. Furthermore, the packing elements may be connected to each other by twisting together inter-apertured strips at respective peripheries of the packing elements.

The shape of the arcuate bends may be retained by means of longitudinally spaced rigid retaining elements which extend across the arc. Both ends of the retaining elements may be hooked to facilitate attachment thereof to the packing element.

Furthermore, the distance (i.e. the space) between the first and second packing elements may be maintained by a rigid spacer element spanning the space and fastened to the first and second packing elements. Instead, the distance may be maintained by means of further retaining elements extending across the arcuate bends in the second packing element.

Further there is provided a method of installing a packing in an evaporative cooler, which includes suspending within the cooler, a pack prepared according to the method of the invention as above described.

The installation method may include rotating and suspending the pack to provide a stack of interconnected packing elements within the cooler. Where the pack is installed within a cooling tower, for example, the top-most packing element can be fastened to a structural member within the cooling tower and, thereafter, the pack is self-supporting since the individual packing elements support one another as above described.

The installation method may further include suspending, side by side, a plurality of packs prepared according to the method of the invention. Then the size of the packing elements and hence the in-use length and width dimensions of the packs may be dictated by the particular configuration of structural members within the cooling tower from which the packs are to be suspended.

For counter-flow evaporative coolers, the pack/stack of interconnected packing elements preferably is suspended substantially vertically within the evaporative cooler. However for cross-flow evaporative coolers, the pack/stack of packing elements can conveniently be tilted, for example by up to about 45° or more from the vertical, to compensate for the angle of displacement of the water which is blown in a sideward direction by the cross flow of air through the evaporative cooler.

Adjacent packing elements are spaced apart at their furthest points from each other at a distance (c, d) of about 75 mm to about 600 mm, preferably about 100 mm to about 400 mm, more preferably about 200 mm to about 300 mm.

In the Applicant's opinion, the packing element described in the specification and/or claims of its US-A-4,762,650 (corresponding to EP-A-0250061) are particularly suitable for use as the sheets of flexible, apertured material from which the packing elements of the present invention can be prepared by forming bends in the sheets as above-described.

A tie for tying together first and second apertured packing elements of a pack constructed according to the method of the invention as above described, may be generally V- or S-shaped with a hook at one end and having a particular size and shape that enables it to be positioned with its hooked end hooked onto one of the packing elements and its other end projecting through one of the apertures of the second packing element, in a region of the pack where the first and second packing elements touch or are adjacent each other.

In use, the tie can be located in an operative position through apertures of the first and second packing elements by flexing one or other of these packing elements while pushing and/or pivoting the tie through the apertures and/or hooking the hooked end thereof onto the element(s).

The other end of the tie may be hooked or curved.

The connecting element can be elongate with a hook at one end and have a slightly curved or bent other end to enable it to be threaded through apertures of both the first and second packing elements in a region where the first and second packing elements touch or are adjacent to each other.

In use, the curved or bent other end can readily be passed through apertures of both the first and second packing elements by rotating it while pushing it in the desired direction of threading. Its hooked end is hooked onto an inter-aperture strip of one or both of the packing elements.

The invention is now described by way of the following non-limiting examples and with reference to the drawings, in which

Figure 1 is an end view of an expanded metal sheet which has been bent in the process of forming an embodiment of a packing element;

Figure 2 is another expanded metal sheet similar to the sheet of Figure 1, which has been bent in the process of forming another embodiment of a packing element;

Figure 3 is an end view of two packing elements prepared from the sheets of Figures 1 and 2 respectively and connected together in accordance with the method of the invention;

Figure 4 is a three-dimensional view of a portion of the interconnected packing elements shown in Figure 3;

Figure 5 is a section through two further embodiments of packing elements, connected together according to the method of the invention;

Figure 6 is a three-dimensional view of a portion of the interconnected packing elements shown in Figure 5;

Figure 7 is a schematic drawing of a pack constructed according to the method of the invention with packing elements as shown in Figures 3 and 4;

Figure 8 is a schematic drawing of a pack constructed according to the method of the invention with packing elements as shown in Figures 5 and 6;

Figures 9 to 11 are three-dimensional drawings of a tie, a connecting element, and a further connecting element respectively, for use in the method of the invention;

Figures 12 to 16 are schematic representations of portions of various embodiments of packings;

Figures 17 to 20 illustrate a method of connecting adjacent packing elements together along their respective peripheries;

Figures 21(a) and 21(b) illustrate packing elements forming packs in accordance with the present invention; and

Figure 22 is a graph illustrating Ka/L/A as a function of the ratio F (r/$\ell$).

In the drawings, reference numerals 10 and 12 generally indicate packing elements according to the invention, for use in a method of constructing a packing for a cooling tower or other evaporative cooler.

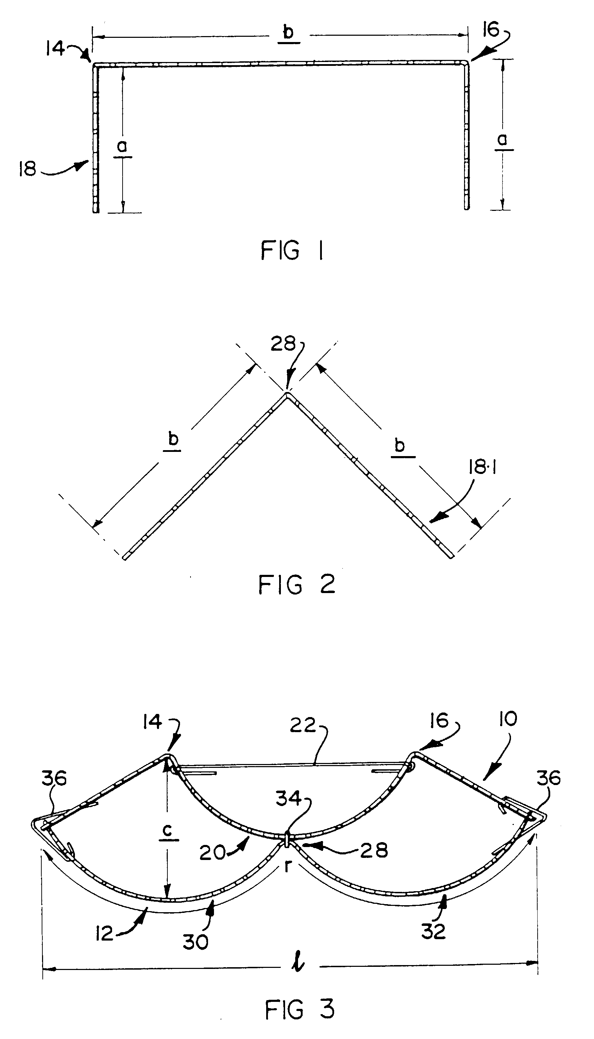

Packing element 10 is prepared by forming two angular bends 14 and 16 (as shown in Figure 1) in a sheet of expanded metal 18. The bends 14, 16 are formed along the sheet 18 such that each of the bends 14, 16 is at the same distance $\underline{a}$ from the adjacent periphery of the sheet 18 and the distance $\underline{b}$ between the bends 14, 16 is twice the distance $\underline{a}$. An arcuate bend 20 is then formed (Figure 3) along the sheet 18 between the angular bends 14, 16, and the arcuate shape of this bend 20 is retained by means of retaining elements 22 in the form of lengths of wire of 2mm width with a hook at each end. The wire ties are located across the arcuate bend 20 and at intervals along the length of the sheet 18, by hooking the ends of the elements 22 around inter-aperture strips in the respective vicinities of the angular bends 14, 16.

The packing element 10 is placed on a support surface (preferably at ground level below and near the site at which it is to be used). It is self-supported on an end periphery 26 thereof with the angular and arcuate bends 14, 16, 20 extending substantially vertically from the support surface.

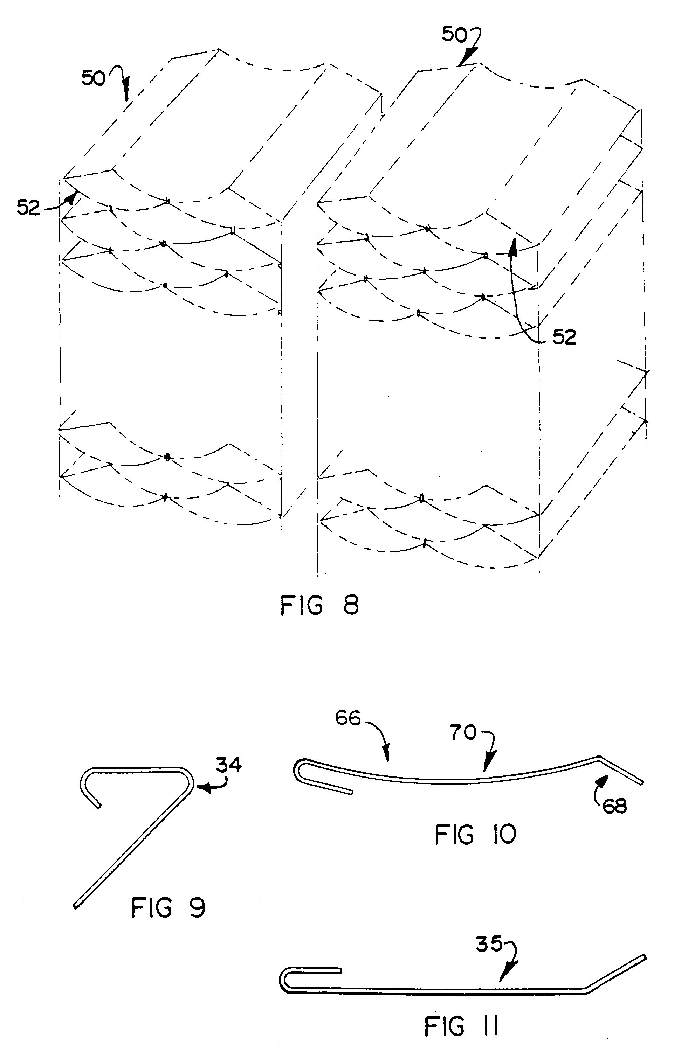

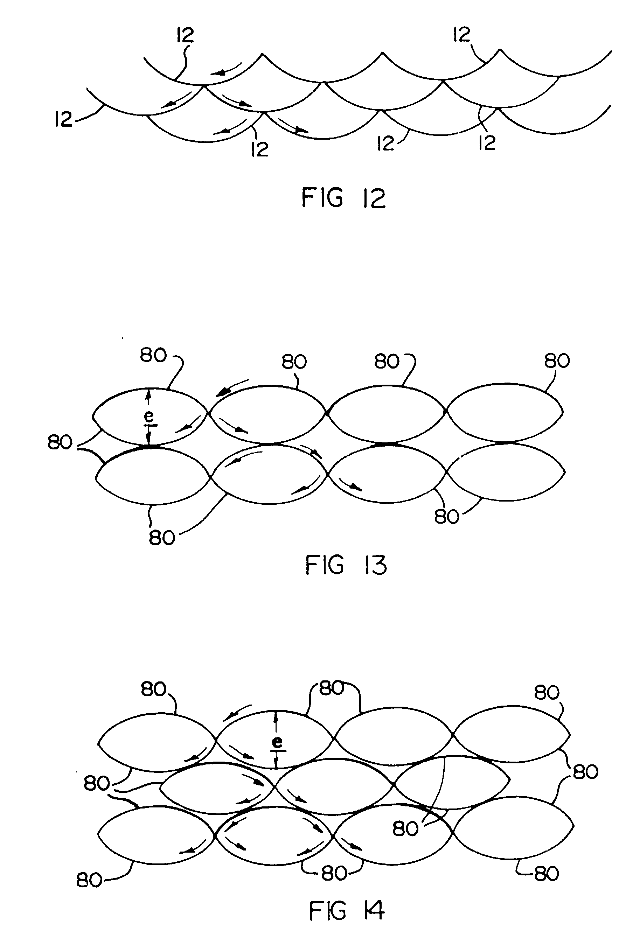

The packing element 12 is prepared by forming an angular bend 28 along the length of an expanded metal sheet 18.1 which is identical in all respects to the abovementioned sheet 18. The angular bend 28 is formed equidistant (ie at a distance $\underline{b}$) from the opposed side peripheries of the sheet 18.1. An arcuate bend 30, 32 is then formed along the sheet 18.1 on each side of the angular bend 28, and extending to the adjacent side periphery of the sheet 18.1. Packing element 12 is placed on the support surface next to the packing element 10 so that the respective bends 14, 16, 20 and 30, 28, 32 of the packing elements 10 and 12 are staggered as shown in Figure 3 and the angular bend 28 of packing element 12 touches the arcuate bend 20 of packing element 10 along the respective lengths of the two elements 10, 12. Elements 10, 12 are connected together along this touching region by means of wire ties 34 of 3mm width (Figure 9) which are threaded through apertures in both packing elements 10, 12 and hooked to an inter-aperture strip of one of the elements 10, 12. Instead, or in addition, wire connecting elements 35 of 3mm width (Figure 11) are threaded through aligned apertures of the packing elements 10, 12 in this touching region. One end of the element 35 is hooked for attachment to aligned inter-aperture strips of the packing elements 10, 12 while the other end is slightly curved to facilitate threading through aligned apertures as above described.

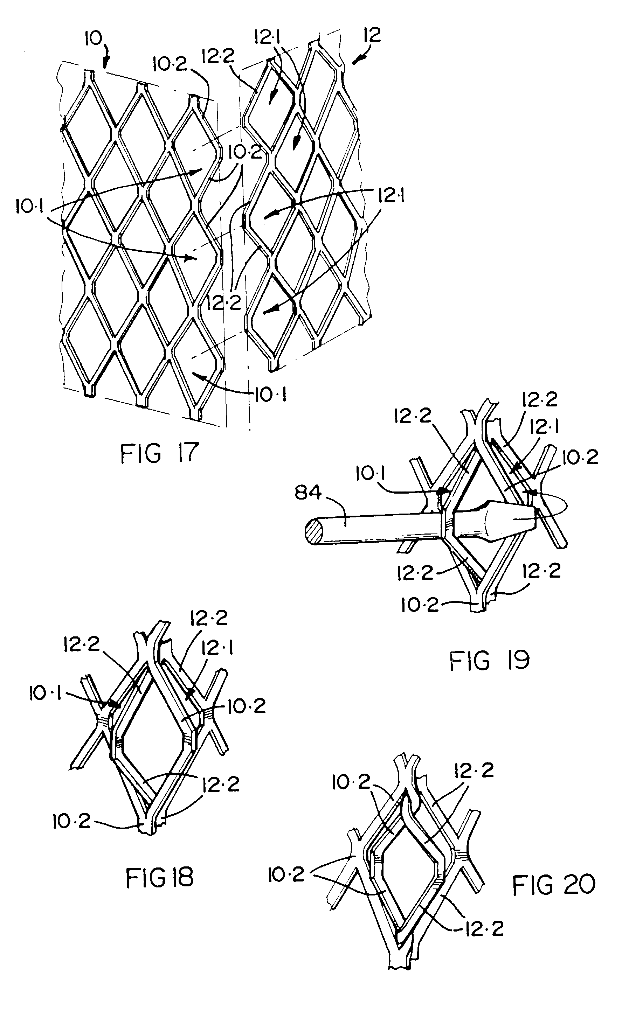

The side peripheries of packing element 12 are brought into engagement with the side peripheries of packing element 10, and these inter-engaging side peripheries of elements 10 and 12 are connected by means of wire ties 36 located through apertures of both elements 10 and 12 as shown in Figure 3. The ties 36 are located at intervals along the opposed peripheries of elements 10 and 12. Instead, packing elements 10 and 12 can be connected by twisting together inter-aperture strips (optionally at intervals) along the respective peripheries of the elements 10, 12, as shown in Figures 17 to 20.

Figures 17 to 20 illustrate inter-aperture strips 12.2 of the element 12 being placed through apertures 10.1 defined by inter-aperture strips 10.2 of the element 10, and the inter-aperture strips 12.2 and 10.2 being twisted together with the aid of a screwdriver or like tool 84.

A packing element 10a similar to packing element 10 is prepared as described above and placed next to the packing element 12 with its two angular bends touching the two arcuate bends 30, 32 of packing element 12 where the packing element 10a is connected to packing element 12 at intervals along the lengths thereof by means of further ties 34.

Further packing elements 12a, 12b, etc. are prepared as described above for packing element 12, and further packing elements 10b, etc. are prepared as described above for packing element 10, and connected, together as described above for packing elements 10, 12 and 10a.

The number of interconnected elements 10, 12 for a single pack will be dictated by the depth of the packing required for the particular cooling tower for which it is being constructed. When this number is reached, the pack is turned through 90° to provide a stack 38 of packing elements with packing element 10 as the top-most, and the stack 38 is then hoisted into the desired position in the cooling tower. The packing element 10 is fastened in any convenient manner to one of the structural beams of the cooling tower. In all other respects, the pack 38 is self-supporting.

If necessary, the spacing $c$ which can vary from about 75 to 600mm between adjacent packing elements 10, 12 can be maintained, for example at about 250mm, by means of spacer elements (not shown) which may be in the form of lengths of wire of 3mm width attached to packing elements 10 and 12 respectively and designed to span the desired distances between the angular bends 14, 16 of packing element 10 and the furthest points of the arcuate bends 30, 32 of the packing element 12. Instead, the spacing between adjacent elements can be maintained by using further retaining elements to retain the desired shape of the angular bends 30, 32 of packing element 12 in a similar manner in which elements 22 are used to retain the shape of the angular bend 20 of packing element 10.

It will be appreciated that the profile width (which is represented in Figure 3 as r) of each of the packing elements 10 and 12 is 2b (being the width of the sheet of expanded metal 18), and that the profile width of each of the elements 10 and 12 is greater than the actual width which is represented in Figure 3 as $\ell$. The ratio F of profile width to actual width ($r/\ell$) can vary from about 1.1 to about 1.57, but is preferably maintained in the range of about 1.2 to about 1.35.

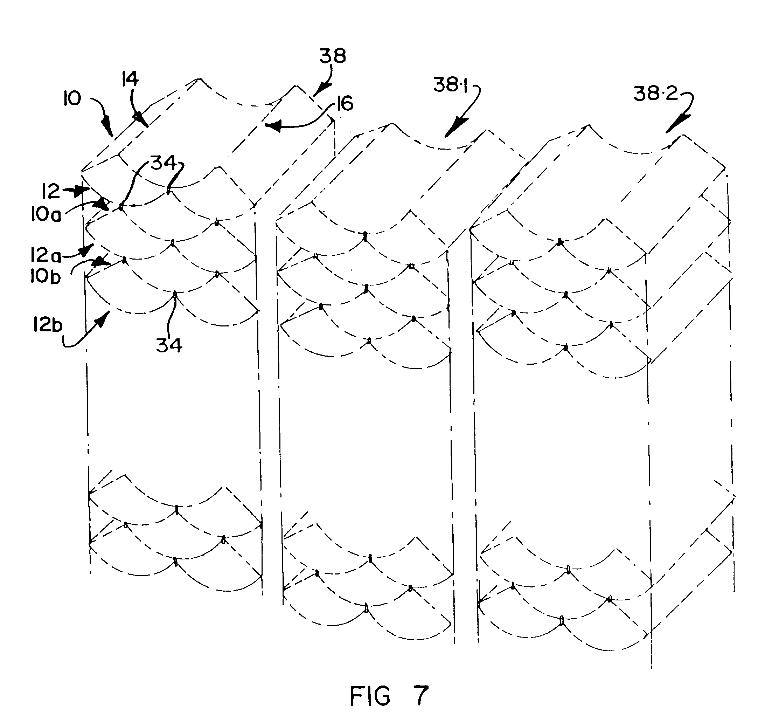

A number of similar packs are constructed as described above and are hoisted as stacks 38.1, 38.2, etc. into position in side-by-side relationship with the first stack 38 (see Figure 7) until a desired packing for the cooling tower is installed.

If the structural beams in the cooling tower from which the packs/stacks 38, 38.1, 38.2, etc. are suspended, are spaced apart a distance of approximately 1 metre, a convenient width for the packing elements 10, 12 is approximately 2 metres with the distance between angular bends 14, 16 being approximately 1 metre. The packing element 10 can then readily be fastened to two adjacent beams along its angular bends 14, 16. The Applicant further considers 1,2m to be a convenient length for the packing elements 10, 12.

Optionally the packs can be installed in the same orientation to one another, i.e. as shown in Figures 7 and 8; or they can be installed with one or more of the packs rotated through about 90° about a longitudinal axis, i.e. so that the inclined surfaces of the packing elements constituting one or more of the packs have respective angles of inclination which vary in a direction which is substantially at 90° to those of the packing elements constituting the other pack(s).

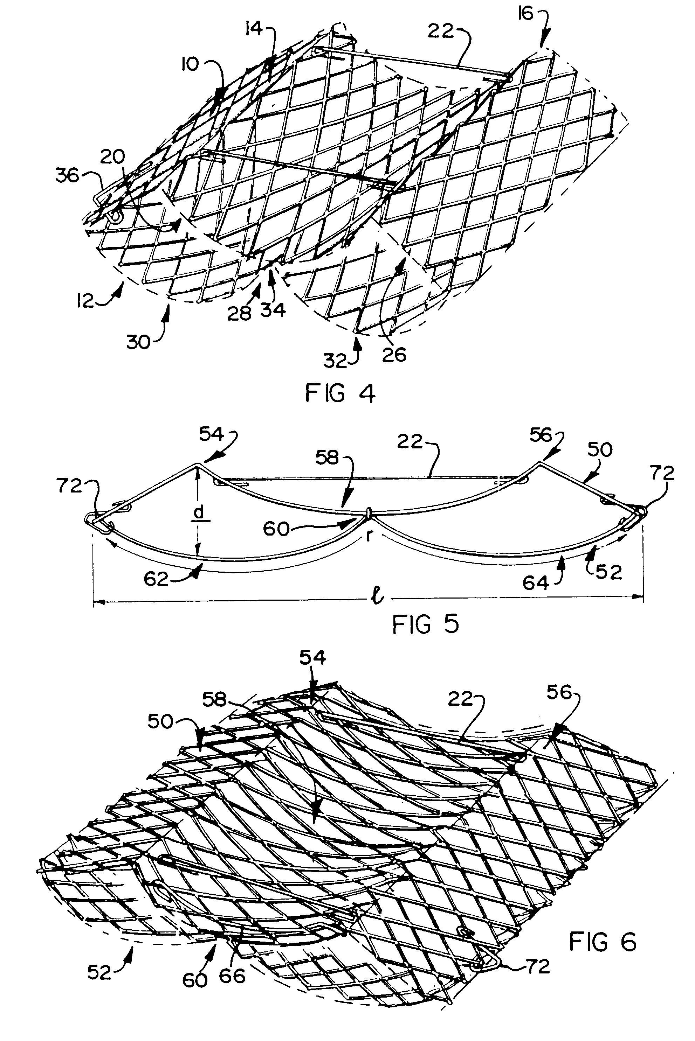

Figures 5 and 6 show packing elements 50 and 52 which are similar to packing elements 10 and 12. They differ from elements 10 and 12 in that in those elements the angular and arcuate bends 14, 16, 20 and 28, 30, 32 are formed along the expanded metal sheets, whereas packing elements 50 and 52 are prepared by forming angular and arcuate bends 54, 56, 58 and 60, 62, 64 across expanded metal sheets similar to those (18, 18.1) used for packing elements 10 and 12. Thus the elements 50 and 52 have profile lengths r which are greater than their actual lengths $\ell$.

Packing elements 50 and 52 are connected together in similar manner to packing elements 10 and 12. The angular bend 60 of packing element 52 touches the lowest point of the arcuate bend 58 of packing element 50, along the width thereof, and elements 50 and 52 are connected together at intervals in this touching region (as shown in Figure 6) by means of elongate wire connecting elements 66 of 3mm width located along the packing elements at right angles to the direction of the angular and arcuate bends 54, 56, 58, 60. The connecting elements 66 are threaded through apertures of both packing elements 50 and 52 and hooked onto an inter-aperture strip of one of the packing elements 50, 52. A bent end portion 68, and an arcuate bend 70 along the element 66 and which corresponds with the arcuate bend 58 of the packing element 50, facilitate threading of the connecting element 66 into its operative position.

Furthermore, the end peripheries of packing elements 50 and 52 engage with one another in a similar manner in which the side peripheries of elements 10 and 12 interengage. The interengaged end peripheries of elements 50 and 52 are connected together by means of wire ties 72 of 3mm width as shown in Figure 5, which pass through apertures of both packing elements 50 and 52 and hook onto inter-aperture strips of both elements. Instead, packing elements 50 and 52 can be connected by twisting together inter-aperture strips at or along the respective peripheries of the elements 50, 52, in similar manner as described above for packing elements 10, 12 with reference to Figures 17 to 20.

At their furthest points from each other the packing elements 50 and 52 are at a distance $\underline{d}$ of about 150mm apart, but can vary from 75mm to 600mm. The ratio F(r/ℓ) is in the range of about 1.2 to about 1.35, but can vary from about 1.1 to about 1.57.

Figures 12 to 16 illustrate portions of various embodiments of packings, which comprise packing elements 12 or 80. Adjacent elements (i.e. one above the other) 12 or 80 in the embodiments shown in Figures 12, 13, 14, 15 and 16 are spaced apart, at their furthest points from each other, a distance $\underline{e}$ of about 200mm, but can vary from about 75mm to 600mm. The ratio F (r/ℓ) is in the range of about 1.2 to about 1.35, but can vary from about 1.1 to about 1.57. Arrows indicate the directions of flow of water trickling along the trickle surfaces of the packings illustrated.

In Figure 12, three layers of packing elements, are shown, with two packing elements 12 in each layer. The elements 12 in each layer are connected by twisting together inter-aperture strips at intervals along their respective peripheries. This method of connection is not illustrated in Figure 12 but can be seen in Figures 17 to 20. The packing elements 12 are staggered in the direction of the length of the pack.

It will be appreciated that the configuration illustrated in Figure 12 can also be achieved with packing elements 80, each comprising a sheet of apertured material having a single arcuate bend which extends across the entire width or length of the sheet. Four packing elements 80 in each of the three layers could then be used to obtain the configuration (shown in Figure 12) achieved with two elements 12 in each layer.

In Figure 13, four layers of packing elements 80, are shown, with four elements 80 in each layer. As can readily be seen, the packing elements 80 in the second and fourth layers are inverted relative to those in the first and third layers. The four elements 80 in each of the layers are connected (not shown) by twisting together inter-aperture strips at intervals along their respective peripheries. The packing elements 80 are aligned in the direction of the length of the pack.

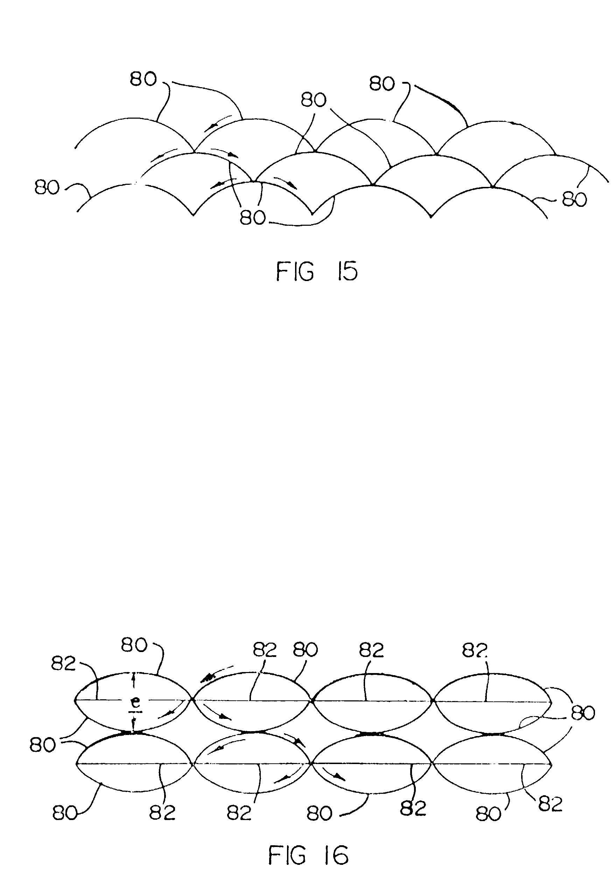

In Figure 14, six layers of packing elements 80 are shown. The packing (only a portion of which is illustrated in Figure 14), is similar to that of Figure 13 in most respects, and differs only in that the layers of the Figure 14 packing are arranged in pairs with adjacent (the one above the other) elements 80 in each pair of layers being aligned with each other, and adjacent (i.e. one above the other) pairs of layers being staggered in the direction of the length of the pack.

In Figure 15, three layers of packing elements 80 are shown with four elements 80 in each layer. The elements 80 are staggered in the direction of the length of the pack.

In Figure 16, reference numeral 82 generally indicates packing elements which comprise sheets of a flexible apertured material similar to the sheets from which the packing elements 10, 12 and 80 are prepared. As is evident from the drawing, the packing elements 82 form intermediate layers vertically spaced apart from one another, throughout the packing. These layers being essentially horizontal also serve to increase the splash surface area of the pack. The packing elements 82 serve to retain the arcuate shape of the packing elements 80. Accordingly retaining elements (e.g. the wire elements 22 shown in Figures 2 to 6) are not required.

The layers of packing elements in the packings which are partially illustrated in Figures 12 to 16 can be connected together by means of the wire ties 34, 36, 72 or connecting elements 35, 66 as described above and illustrated in the drawings. Instead, or in addition, where respective peripheries of packing elements 12, 80, 82 in different layers are adjacent each other, such packing elements (and hence different layers) can be connected by twisting together the inter-aperture strips at said peripheries.

In the packs and packings of the invention, all of the separate advantages of conventional splash packs and trickle packs are combined, and such packs and packings can beneficially be used for counterflow and crossflow cooling without losing any advantages. Further advantages of the invention, at least as exemplified, include the simplicity of construction of the packing elements, and the ease with which a packing can be constructed according to the method. Conventional complicated support systems for supporting packings within cooling towers and the like can now be dispensed with. All that is required is for the top packing element of each pack to be fastened to one of the structural beams within the tower. Alternatively, with suitable support beams provided below the packing, the packing elements can simply be stacked one above the other, supported from below. In all other respects a pack constructed according to the method of the invention can be self-supporting. Furthermore, the packs can be constructed at ground level, thereby obviating scaffolding requirements and reducing the risk of accidents and labour costs. Yet further, because of the self-supporting nature of the pack, relatively light connecters and ties are required, with a resulting saving in material costs.

The present invention, at least as exemplified, improves upon conventional packs in several important respects. The apertured corrosion-resistant material of the packing elements (preferably expanded metal such as stainless steel) does not require the provision of horizontally disposed support members, it is essentially self-supporting. The particular configurations of the apertured sheets from which the packing elements are prepared, e.g. the sheet dimensions, the angle of inclination of the trickle regions, the width of the inter-aperture strips, the void ratio and aperture dimensions, are optimised to promote trickle formation rather than film formation of liquid in the trickle regions of the inclined surfaces, to inhibit concentration of the liquid at the lowermost points of the layers of packing elements, throughout the pack. By limiting the formation of a liquid film on the packing element by providing, inter alia, a smaller surface area than is available in film packs, not only is there a significant saving in material, which makes it feasible to use stainless steel, but the resulting increased uniformity of dispersion throughout the pack allows greater advantage to be taken of both splash and trickle cooling effects.

The generally diamond configuration of the pack according to the present invention increases the actual distance travelled by liquid trickling under gravity along trickle regions of the packing elements. The overall liquid/air contact time is thereby increased and the cooling effectiveness of the pack is thereby improved significantly.

As mentioned above, the packing elements can be inter-connected and self-supporting, the pack being suspended by an upper packing element from a support member in a cooling tower. This enables tilting or pivoting of the pack so that the packing elements are inclined away from the horizontal. This is a considerable advantage in cross-flow packing configurations since the packing elements can be inclined towards the direction of air flow, to allow the liquid to gravitate towards the direction of air flow and thereby causing counter-flow to be superimposed on the overall cross-flow. The cooling efficiency of the pack is thereby considerably enhanced.

Another advantage of the present invention is the inherent flexibility of the packing elements, particularly those of expanded metal. Because of the flexibility they tend to vibrate to a very limited extent in use, under impact of the liquid. The vibration tends to promote disintegration of the water into droplets upon impact and dispersion of the droplets.

An advantage of expanded metal packing elements of the invention, is their high thermal conductivity.

## Claims

1. A pack for an evaporative cooler, which pack has width, depth and length dimensions and comprises at least two packing elements (10; 12; 50; 52; 80) of an apertured material, the packing elements being arranged in layers so that the number of layers determines the length of the pack, and the packing elements having actual width and length dimensions which determine the width and depth of the pack; characterized in that said pack is a combination splash/trickle pack, and each of the packing elements has an inclined surface with an angle of inclination which varies in a direction corresponding to the width or length of the element so that each of the packing elements has a profile width or profile length (r) which is greater than its actual width or length ($\ell$) and so that there are thereby defined:

   a first region of the inclined surface having a greater angle of inclination so as to serve as a trickle surface; and

   a second region of the inclined surface having a lesser angle of inclination and being spaced a sufficient distance from another packing element to serve as a splash surface.

2. A pack as claimed in claim 1, wherein the ratio (F) of profile width or length to actual width or length falls within the range of about 1.1 to about 1.57, and adjacent packing elements are spaced apart at their furthest points from each other a distance (c,d) of about 75 mm to about 600 mm.

3. A pack as claimed in claim 2, wherein the ratio (F) falls within the range of about 1.2 to about 1.35, and the distance (c,d) is about 100 mm to about 400 mm.

4. A pack as claimed in claim 2 or claim 3, wherein the apertured material has apertures (10.1, 12.1) with width and length dimensions of approximately 10 and 30 mm respectively to approximately 60 mm and 120 mm respectively.

5. A pack as claimed in any one of claims 1 to 4, wherein the inclined surface of a first of the plurality of packing elements (10; 50; 80) is a curved surface which curves in one direction and the inclined surface of a second of the plurality of packing elements (12; 52; 80) is a curved surface which curves in another direction, and the first (10; 50; 80) and second (12; 52; 80) packing elements are arranged in a manner to encourage continual liquid dispersion.

6. A pack as claimed in claim 5, wherein the second packing element (80) comprises an inverted first packing element (80).

7. A pack as claimed in claim 5, wherein the first packing element (10; 50) and the second packing element (12; 52) each comprise a sheet of an apertured material having an angular bend (14, 16, 54, 56; 28, 60) and having an arcuate bend (20, 58; 30, 32, 62, 64) which defines the curved surface.

8. A pack as claimed in claim 7, wherein the first packing element (10; 50) has two angular bends (14, 16; 54, 56) and an arcuate bend (20; 58), the angular bends (14, 16; 54, 56) being separated from each other by the arcuate bend (20; 58), and the second packing element (12; 52) has two arcuate bends (30, 32; 62, 64) and an angular bend (28; 60), the arcuate bends (30, 32; 62, 64) being separated from each other by the angular bend (28; 60), and the angular bends (14, 16, 28; 54, 56, 60) of the first (10; 50) and second 12; 52) packing elements are staggered.

9. A pack as claimed in any one of the preceding claims, wherein the packing elements (10; 12; 50; 52; 80) comprise bent sheets of an apertured material which are connected to one another or to other sheets in the pack so as to retain the plurality of sheets in their bent configuration.

10. A pack as claimed in any one of the preceding claims, which is a unitary structure with the packing elements (10; 12; 50; 52; 80) connected to one another so as to form a cohesive assembly thereof.

11. A packing for an evaporative cooler, which comprises a plurality of packs as claimed in any one of claims 1 to 10, arranged side by side.

12. A method of constructing a pack, which method includes connecting together a first packing element (10; 50; 80) and a second packing element (12; 52; 80), each comprising a sheet of a flexible, apertured material, the method being characterized in that the packing elements are connected together in a manner to provide a combination splash/trickle pack as claimed in any one of claims 1 to 10, with the first and second packing elements being positioned such that when the pack is oriented for use, the first and second packing elements are located one above the other, and in a manner such that at least a portion of each of the packing elements has an arcuate bend (20, 58; 30, 32, 62, 64) which defines a curved surface, regions of which serve as splash and trickle surfaces respectively.

13. A method as claimed in claim 12, wherein the first and second packing elements have been prepared by forming an angular bend (14, 16, 54, 56; 28, 60) in the sheet, and the packing elements are connected together such that the angular bends of the first and second packing elements are staggered.

14. A method as claimed in claim 12 or 13, wherein the first packing element has two angular bends and an arcuate bend, the angular bends being separated from each other by the arcuate bend, and the second packing element has two arcuate bends and an angular bend, the arcuate bends being separated from each other by the angular bend.

15. A method as claimed in any one of claims 12 to 14 for constructing a pack of installing in an installation site in an evaporative cooler, and which includes assembling the packing elements on a substantially horizontal support surface outside the installation site, by orienting the packing elements so as to place their major surfaces in vertical planes and with each of the packing elements being self-supportable on a periphery thereof from which the bends extend in a substantially vertical direction, and by connecting the packing elements to one another to form a cohesive assembly thereof.

16. A method as claimed in any one of claims 12 to 15, wherein the first and second packing elements are located one above the other in a manner to provide a unitary structure with the packing elements forming a cohesive assembly.

**Patentansprüche**

1. Packung für einen Verdunstungskühler, welche Packung Breiten-, Tiefen- und Längenabmessungen aufweist und zumindest zwei Packungselemente (10; 12; 50; 52; 80) aus einem öffnungsversehenen Material umfaßt, wobei die Packungselemente in Lagen angeordnet sind, derart, daß die Anzahl der Lagen die Länge der Packung bestimmt, und die Packungselemente tatsächliche Breiten- und Längenabmessungen aufweisen, die die Breite und Tiefe der Packung bestimmen, dadurch gekennzeichnet, daß die Packung eine Spritz/Riesel-Kombinationspackung ist und jedes der Packungselemente eine geneigte Oberfläche mit einem Neigungswinkel besitzt, der in der Breite oder Länge des Elements entsprechender Richtung variiert, so daß jedes der Packungselemente eine Profilbreite oder Profillänge (r) aufweist, die größer ist als seine tatsächliche Breite oder Länge ($\ell$), und daß dadurch

ein erster Bereich der geneigten Oberfläche mit einem größeren Neigungswinkel, um als Sikkerfläche zu dienen, und

ein zweiter Bereich der geneigten Oberfläche mit einem kleineren Neigungswinkel und in einem ausreichenden Abstand von einem weiteren Packungselement, um als Spritzfläche zu dienen, gebildet sind.

**2.** Packung nach Anspruch 1, bei der das Verhältnis (F) der Profilbreite oder -länge zur tatsächlichen Breite oder Länge in den Bereich von etwa 1,1 bis etwa 1,57 fällt und benachbarte Packungselemente an ihren weitesten Punkten voneinander mit einem Abstand (c,d) von etwa 75 mm bis etwa 600 mm beabstandet sind.

**3.** Packung nach Anspruch 2, bei der das Verhältnis (F) in den Bereich von etwa 1,2 bis etwa 1,35 fällt und der Abstand (c,d) etwa 100 mm bis etwa 400 mm beträgt.

**4.** Packung nach Anspruch 2 oder Anspruch 3, bei der das öffnungsversehene Material Öffnungen (10.1, 12.1) mit Breiten- und Längenabmessungen von 10 bzw. 30 mm bis etwa 60 mm bzw. 120 mm besitzt.

**5.** Packung nach einem der Ansprüche 1 bis 4, bei der die geneigte Oberfläche eines ersten der Mehrzahl von Packungselementen (10; 50; 80) eine gekrümmte Fläche ist, die in einer Richtung gekrümmt ist, und die geneigte Oberfläche eines zweiten der Mehrzahl von Packungselementen (12; 52; 80) eine gekrümmte Fläche ist, die in einer anderen Richtung gekrümmt ist, und das erste (10; 15; 80) und das zweite (12; 52; 80) Packungselement in einer eine kontinuierliche Flüssigkeitsverteilung fördernden Weise angeordnet sind.

**6.** Packung nach Anspruch 5, bei der das zweite Packungselement (80) aus einem umgekehrten ersten Packungselement (80) besteht.

**7.** Packung nach Anspruch 5, bei der das erste Packungselement (10; 50) und das zweite Packungselement (12; 52) jeweils ein Bahnstück eines öffnungsversehenen Materials mit einer winkelförmigen Biegung (14, 16, 54, 56; 28, 60) und mit einer bogenförmigen Biegung (20; 58; 30; 32; 62; 64) umfassen, die die gekrümmte Oberfläche definiert.

**8.** Packung nach Anspruch 7, bei der das erste Packungselement (10; 50) zwei winkelförmige Biegungen (14, 16; 54, 56) und eine bogenförmige Biegung (20; 58) aufweist, wobei die winkelförmigen Biegungen (14, 16; 54, 56) durch die bogenförmige Biegung (20; 58) voneinander getrennt sind, und das zweite Packungselement (12; 52) zwei bogenförmige Biegungen (30, 32; 62, 64) und eine winkelförmige Biegung (28; 60) aufweist, wobei die bogenförmigen Biegungen (30, 32; 62, 64) durch die winkelförmige Biegung (28; 60) voneinander getrennt und die winkelförmigen Biegungen (14, 16, 28; 54, 56, 60) des ersten (10; 50) und des zweiten (12; 52) Packungselements versetzt sind.

**9.** Packung nach einem der vorhergehenden Ansprüche, bei der die Packungselemente (10; 12; 50; 52; 80) gebogene Bahnstücke eines öffnungsversehenen Materials umfassen, die miteinander oder mit weiteren Bahnstücken in der Packung verbunden sind, um so die Mehrzahl von Bahnstücken in ihrer gebogenen Konfiguration zu halten.

**10.** Packung nach einem der vorhergehenden Ansprüche, die ein einheitliches Bauteil ist, bei dem die Packungselemente (10; 12; 50; 52; 80) miteinander verbunden sind, um von diesen eine zusammenhängende Anordnung zu bilden.

**11.** Packungsanordnung für einen Verdunstungskühler, die eine Mehrzahl von Packungen nach einem der Ansprüche 1 bis 10, Seite an Seite angeordnet, umfaßt.

**12.** Verfahren zum Herstellen einer Packung, bei welchem Verfahren ein erstes Packungselement (10; 50; 80) und ein zweites Packungselement (12; 52; 80), die jeweils ein Bahnstück eines flexiblen, öffnungsversehenen Materials umfassen, miteinander verbunden werden, wobei das Verfahren dadurch gekennzeichnet ist, daß die Packungselemente miteinander in einer Weise verbunden werden, daß eine Spritz/Riesel-Packungskombination nach einem der Ansprüche 1 bis 10 gebildet wird, mit dem ersten und dem zweiten Packungselement in einer solchen Position, daß, wenn die Packung für den Gebrauch ausgerichtet ist, das erste und das zweite Packungselement übereinander angeordnet sind, und in einer solchen Weise, daß zumindest ein Teil eines jeden der Packungselemente eine bogenförmige Biegung (20, 58; 30, 32, 62, 64) aufweist, die eine gekrümmte Oberfläche definiert, von der Bereiche als Spritz- bzw. Rieseloberfläche dienen.

**13.** Verfahren nach Anspruch 12, bei dem das erste und das zweite Packungselement durch Bilden einer winkelförmigen Biegung (14, 16, 54, 56; 28, 60) in dem Bahnstück hergestellt worden sind und die Packungselemente derart verbunden werden, daß die winkelförmigen Biegungen des ersten und des zweiten Packungselements versetzt sind.

**14.** Verfahren nach Anspruch 12 oder 13, bei dem das erste Packungselement zwei winkelförmige Biegungen und eine bogenförmige Biegung aufweist, wobei die winkelförmigen Biegungen durch die bogenförmige Biegung voneinander getrennt sind, und das zweite Packungselement zwei bogenförmige Biegungen und eine winkelförmige Biegung aufweist, wobei die bogenförmigen Biegungen durch die winkelförmige Biegung voneinander getrennt sind.

**15.** Verfahren nach einem der Ansprüche 12 bis 14 zum Herstellen einer Packung zum Installieren an einem Installationsort in einem Verdunstungskühler, bei dem die Packungselemente auf einer im wesentlichen horizontalen Stützfläche außerhalb des Installationsortes zusammengebracht werden durch Ausrichtung der Packungselemente derart, daß ihre Hauptflächen in vertikalen Ebenen angeordnet sind, und wobei jedes der Packungselemente selbsttragend an einem Umfang ist, von dem die Biegungen in im wesentlichen vertikaler Richtung ausgehen, und durch Verbindung der Packungselemente miteinander zur Bildung einer zusammenhängenden Anordnung aus diesen.

**16.** Verfahren nach einem der Ansprüche 12 bis 15, bei dem die ersten und zweiten Packungselemente übereinander in einer Weise angeordnet werden, daß ein einheitliches Bauteil geschaffen wird, bei dem die Packungselemente eine zusammenhängende Anordnung bilden.

**Revendications**

**1.** Empilement pour dispositif de refroidissement par évaporation, lequel empilement a des dimensions de largeur, de profondeur et de longueur et comprend au moins deux éléments de garnissage (10 ; 12 ; 50 ; 52 ; 80) constitués d'un matériau perforé, les éléments de garnissage étant disposés en couches, de sorte que le nombre de couches détermine la longueur de l'empilement, et les éléments de garnissage ayant des dimensions de largeur et de longueur réelles qui déterminent la largeur et la profondeur de l'empilement ; caractérisé en ce que ledit empilement est un empilement à projection et à ruissellement combinés, et chacun des éléments de garnissage comporte une surface inclinée avec un angle d'inclinaison qui varie dans une direction correspondant à la largeur ou la longueur de l'élément, de manière que chacun des éléments de garnissage ait une largeur de profil ou une longueur de profil (r) qui est supérieure à sa largeur ou à sa longueur réelle (l), et de sorte que soient définies ainsi :

une première zone de la surface inclinée ayant un angle d'inclinaison plus grand de façon à servir de surface de ruissellement ; et
une seconde zone de la surface inclinée ayant un angle d'inclinaison plus petit, et qui est espacée d'un autre élément de garnissage d'une distance suffisante de façon à servir de surface de projection.

**2.** Empilement selon la revendication 1, dans lequel le rapport (F) de la largeur ou de la longueur de profil à la largeur ou la longueur réelle se trouve dans la plage allant d'environ 1,1 à environ 1,57, et des éléments de garnissage adjacents sont écartés l'un de l'autre au niveau de leurs points les plus éloignés d'une distance (c, d) allant d'environ 75 mm à environ 600 mm.

**3.** Empilement selon la revendication 2, dans lequel le rapport (F) se trouve dans la plage allant d'environ 1,2 à environ 1,35, et la distance (c, d) est d'environ 100 mm à environ 400 mm.

**4.** Empilement selon la revendication 2 ou la revendication 3, dans lequel le matériau perforé comporte des ouvertures (10.1, 12.1) avec des dimensions de largeur et de longueur allant respectivement approximativement de 10 et 30 mm à respectivement approximativement 60 mm et 120 mm.

**5.** Empilement selon l'une quelconque des revendications 1 à 4, dans lequel la surface inclinée d'un premier d'une pluralité d'éléments de garnissage (10 ; 50 ; 80) est une surface recourbée qui se recourbe dans une direction, et la surface inclinée d'un second d'une pluralité d'éléments de garnissage (12 ; 52 ; 80) est une surface recourbée qui se recourbe dans une autre direction, et le premier (10 ; 50 ; 80) ainsi que le second (12 ; 52 ; 80) éléments de garnissage sont disposés de manière à favoriser une dispersion de liquide continue.

**6.** Empilement selon la revendication 5, dans lequel le second élément de garnissage (80) comprend un premier élément de garnissage inversé (80).

**7.** Empilement selon la revendication 5, dans lequel le premier élément de garnissage (10 ; 50) et le second élément de garnissage (12 ; 52) comprennent chacun une feuille constituée d'un matériau perforé comportant un coude angulaire (14, 16, 54, 56 ; 28, 60) et comportant un coude en forme d'arc (20, 58 ; 30, 32, 62, 64) qui définit la surface recourbée.

**8.** Empilement selon la revendication 7, dans lequel le premier élément de garnissage (10 ; 50) comporte deux coudes angulaires (14, 16 ; 54, 56) et un coude en forme d'arc (20 ; 58), les coudes angulaires (14, 16 ; 54, 56) étant séparés l'un de l'autre par le coude en forme d'arc (20 ; 58), et le second élément de garnissage (12 ; 52) comporte deux coudes en forme d'arc (30, 32 ; 62, 64) et un coude angulaire (28 ; 60), les coudes en forme d'arc (30, 32 ; 62, 64) étant séparés l'un de l'autre par le coude angulaire (28 ; 60), et les coudes angulaires (14, 16, 28 ; 54, 56, 60) du premier (10 ; 50) et du second (12 ; 52) éléments de garnissage sont disposés en quinconce.

**9.** Empilement selon l'une quelconque des revendications précédentes, dans lequel les éléments de garnissage (10 ; 12 ; 50 ; 52 ; 80) comprennent des feuilles cintrées constituées d'un matériau perforé qui sont reliés l'une à l'autre ou à d'autres feuilles dans l'empilement de façon à maintenir la pluralité de feuilles dans leur configuration cintrée.

10. Empilement selon l'une quelconque des revendications précédentes, qui est une structure monobloc, les éléments de garnissage (10 ; 12 ; 50 ; 52 ; 80) étant reliés les uns aux autres de façon à former un assemblage cohésif entre eux.

11. Corps de garnissage pour dispositif de refroidissement par évaporation, qui comprend une pluralité d'empilements selon l'une quelconque des revendications 1 à 10 disposés côte à côte.

12. Procédé de construction d'un empilement, lequel procédé comprend l'étape consistant à relier l'un à l'autre un premier élément de garnissage (10 ; 50 ; 80) et un second élément de garnissage (12 ; 52 ; 80), comprenant chacun une feuille constituée d'un matériau perforé souple, le procédé étant caractérisé en ce que les éléments de garnissage sont reliés l'un à l'autre de façon à produire un empilement à projection et à ruissellement combinés selon l'une quelconque des revendications 1 à 10, les premier et second éléments de garnissage étant positionnés de manière que lorsque l'empilement est orienté pour être utilisé, les premier et second éléments de garnissage soient situés l'un au-dessus de l'autre, et de manière qu'au moins une partie de chacun des éléments de garnissage comporte un coude en forme d'arc (20, 58 ; 30, 32, 62, 64) qui définit une surface recourbée, des zones qui servent respectivement de surfaces de projection et de ruissellement.

13. Procédé selon la revendication 12, dans lequel on a fabriqué les premier et second éléments de garnissage en formant un coude angulaire (14, 16, 54, 56 ; 28, 60) dans la feuille, et les éléments de garnissage sont reliés l'un à l'autre de manière que les coudes angulaires des premier et second éléments de garnissage soient disposés en quinconce.

14. Procédé selon la revendication 12 ou 13, dans lequel le premier élément de garnissage comporte deux coudes angulaires et un coude en forme d'arc, les coudes angulaires étant séparés l'un de l'autre par le coude en forme d'arc, et le second élément de garnissage comporte deux coudes en forme d'arc et un coude angulaire, les coudes en forme d'arc étant séparés l'un de l'autre par le coude angulaire.

15. Procédé selon l'une quelconque des revendications 12 à 14 de construction d'un empilement destiné à être installé dans un lieu d'installation dans un dispositif de refroidissement par évaporation, et qui comprend l'étape consistant à assembler les éléments de garnissage sur une surface de support sensiblement horizontale à l'extérieur du lieu d'installation, en orientant les éléments de garnissage de façon à positionner leurs plus grandes surfaces dans des plans verticaux, chacun des éléments de garnissage pouvant s'auto-supporter sur sa périphérie à partir de laquelle les coudes s'étendent dans une direction sensiblement verticale, et en reliant les uns aux autres les éléments de garnissage de façon à former un assemblage cohésif entre eux.

16. Procédé selon l'une quelconque des revendications 12 à 15, dans lequel les premier et second éléments de garnissage sont situés l'un au-dessus de l'autre de façon à produire une structure monobloc, avec les éléments de garnissage formant un assemblage cohésif.

FIG 1

FIG 2

FIG 3

14

FIG 4

FIG 5

FIG 6

FIG 7

FIG 8

FIG 9

FIG 10

FIG 11

FIG 12

FIG 13

FIG 14

FIG 15

FIG 16

FIG 17

FIG 19

FIG 18

FIG 20

FIG 21 (a)

FIG 21(b)

FIG 22

F RATIO = $r/\ell$